# FASCICULE DE BREVET EUROPEEN

(11) **EP 1 426 241 B1**
(45) Date de publication et mention de la délivrance du brevet: **24.10.2007**
(21) Numéro de dépôt: 03292993.7
(22) Date de dépôt: 01.12.2003
(51) Int. Cl.: B60R 19/18

(54) **Coque de poutre de pare-choc avec logement pour un renfort au droit des longerons**
Schalenförmiger Stossfängerträger mit Lagerung für ein senkrecht zu den Längsholmen verlaufendes Verstärkungselement
Bumper beam shell with housing for a stiffening element at right angles to the frame rails

(30) Priorité: 29.11.2002 FR 0215100
(43) Date de publication de la demande: 09.06.2004
(60) Demande divisionnaire: 07101927.7
(73) Titulaire: COMPAGNIE PLASTIC OMNIUM, 69007 Lyon (FR)
(72) Inventeur: Roussel, Thierry, 52500 Fayl la Foret (FR); Malteste, Stéphane, 01800 Meximieux (FR); Pierrot, Frédéric, 01150 Lagnieu (FR)
(74) Mandataire: Remy, Vincent Noel Paul

(56) Documents cités:
- EP-A- 0 652 138
- US-A- 5 114 198

## Description

La présente invention concerne une coque de poutre de véhicule automobile ainsi qu'une poutre de véhicule automobile. La présente invention concerne plus particulièrement un ensemble d'un renfort et d'une coque de poutre selon le préambule de la revendication 1, ensemble décrit dans le document US 5 114 198 A .

On sait qu'il est nécessaire que les véhicules automobiles puissent anticiper considérablement le transfert des efforts sur des absorbeurs d'énergie lors d'un choc, tel que le choc Danner à moyenne vitesse. Pour absorber cette énergie, on peut monter des prolonges entre les longerons du véhicule et la peau de pare-chocs.

Des prolonges métalliques ont déjà été utilisées dans les pare-chocs en raison de leur bonne rigidité. De telles pièces présentent néanmoins l'inconvénient d'être relativement lourdes. En outre, elles ne s'adaptent pas facilement à une configuration géométrique particulière qui peut être imposée par le véhicule, nécessitant parfois l'ajout de pièces supplémentaires couramment appelées absorbeurs.

C'est pourquoi on a tenté de remplacer les prolonges métalliques par des pièces en matière plastique qui répondent plus favorablement à ces deux critères de poids et de géométrie.

Néanmoins, du fait du peu de rigidité inhérente aux matières utilisées, ces pièces en matière plastique doivent présenter une structure complexe, notamment des nervures, et la matière utilisée doit être mélangée à des fibres de renfort qui augmentent son coût et complexifient la fabrication des pièces, ce qui tend à atténuer, sans pour autant les éliminer, les avantages procurés par le recours à de la matière plastique.

La présente invention vise à proposer une solution permettant de bénéficier de l'aptitude des poutres en matière plastique à s'adapter facilement à des formes spécifiques ainsi que de la rigidité apportée par un ou plusieurs renforts métalliques, sans en présenter les inconvénients.

A cet effet, l'invention a pour objet un ensemble de renfort et de coque de poutre selon la revendication 1.

Grâce à l'invention, le logement prévu dans la coque pour recevoir le renfort métallique peut permettre d'éviter d'avoir à fixer ce renfort à la coque. On évite ainsi les fragilisations engendrées par les fixations du renfort sur la coque. De même, on évite les manipulations et on facilite le recyclage en fin de vie de la poutre constituée par la coque et le renfort.

Par ailleurs, une telle coque peut recevoir deux renforts au droit de chaque longeron du véhicule, de façon que ces renforts absorbent l'énergie de chocs à moyenne vitesse tels que le choc Danner.

Par ailleurs, le logement permet d'obtenir un corps creux qui constitue en soi une structure rigidifiante pour la coque, ce qui ajoute à l'accroissement de rigidité résultant de la présence du renfort dans la coque.

Le logement est dimensionné pour épouser la forme extérieure du renfort dans la partie de la coque disposée au droit de longerons du véhicule, et éventuellement, dans certaines zones, comme par exemple en partie centrale de la coque.

Une coque de poutre selon l'invention peut en outre comporter l'une ou plusieurs des caractéristiques suivantes :
- le logement est délimité par une partie de la coque présentant une section ouverte ;
- la coque est dimensionnée pour épouser la forme intérieure de la peau de pare-chocs derrière laquelle la poutre doit prendre place ;
- elle comporte plusieurs logements pour recevoir plusieurs renforts ;
- le logement comporte des moyens d'absorption de chocs, par exemple des nids d'abeilles locaux ;
- la coque est réalisée en matière thermoplastique, notamment en polypropylène ; et
- le logement consiste en un canal.

Dans un mode de réalisation particulier, la coque comporte au moins deux moyens de fixation à la structure du véhicule et un logement s'étend longitudinalement d'un moyen de fixation à l'autre.

Ainsi, la coque peut recevoir, en outre des prolonges des longerons, un renfort entre les deux longerons, par exemple une traverse métallique, sous forme de tube à section rectangulaire. Ce renfort permet alors de rigidifier considérablement la poutre et de diminuer la pénétration d'un poteau lors d'un impact tel que celui du « pôle test ».

Selon un autre mode de réalisation, la coque de poutre comporte une doublure de coque qui vient s'emboîter avec la coque en formant un corps creux délimitant le logement recevant le renfort.

Ainsi, la doublure de coque permet de faciliter la fixation du renfort métallique dans la coque en matière plastique.

La coque en matière plastique peut être obtenue par moulage ou par extrusion. Elle peut aussi être surmoulée sur le ou les renforts reçus dans son logement.

L'invention a également pour objet un ensemble d'une coque de type précité et d'un renfort. Cet ensemble peut en outre comporter l'une ou plusieurs des caractéristiques suivantes :
- le renfort assure une fonction de soutien vertical de la poutre ;
- le renfort est une prolonge de longeron tubulaire ayant une génératrice sensiblement parallèle à la direction longitudinale du véhicule ;
- la prolonge est en forme de tube biseauté ;
- le renfort comporte une pièce support, notamment un support d'un anneau d'arrimage/remorquage ; et
- le renfort est muni d'une platine à son extrémité située au droit du longeron.

La présente invention a enfin pour objet une poutre de véhicule automobile destinée à prendre place derrière une peau de pare-chocs, caractérisée en ce qu'elle comprend un renfort et une coque telle que décrite ci-dessus.

Cette poutre peut comprendre plusieurs renforts métalliques. L'invention sera mieux comprise à la lecture de la description qui va suivre, donnée uniquement à titre d'exemple et faite en se référant aux dessins annexés dans lesquels :
- la figure 1 est une vue en perspective éclatée d'une poutre de pare-chocs selon un premier mode de réalisation de l'invention ;
- la figure 2 est une vue de l'arrière d'une partie de la poutre de la figure 1 ;
- la figure 3 est une vue en perspective d'une poutre de pare-chocs selon un deuxième mode de réalisation de l'invention ;
- la figure 4 est une vue analogue à la figure 3 montrant un renfort seul ;
- la figure 5 est une vue de dessus d'une poutre de pare-chocs selon un troisième mode de réalisation non revendiqué et ne faisant pas partie de l'invention ; et
- la figure 6 est une vue en coupe selon VI-VI de la figure 5.

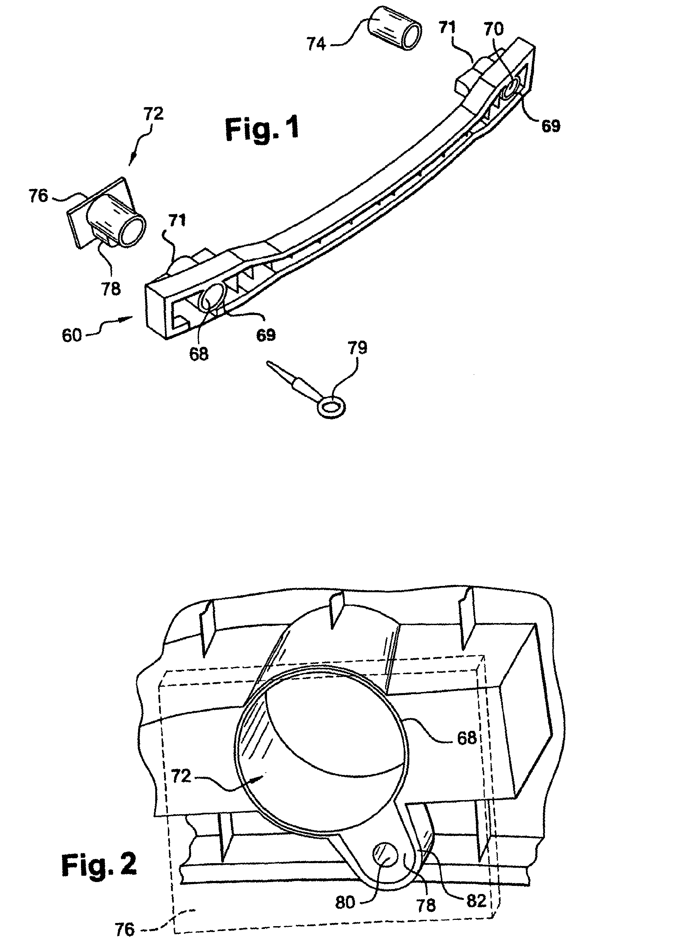

Dans le mode de réalisation de la figure 1, la poutre comprend une coque 60 réalisée en polypropylène ou polycarbonate-polybutyrènetéréphtalate, éventuellement chargés de fibres de verre longues (supérieures à 1mm), ou mélangés à un renfort constitué d'un tissu surmoulé tel que le Twintex de la société Vetrotex.

Cette coque est obtenue par moulage par injection, par compression ou par extrusion-pressage dans des conditions usuelles.

La coque 60, lorsqu'elle est montée sur le véhicule automobile, est agencée directement derrière une peau de pare-chocs (ou bouclier), et est dimensionnée pour épouser la forme intérieure de cette peau.

La coque 60 comprend deux logements 68 et 70 destinés à recevoir deux renforts 72 et 74. Ces renforts constituent des prolonges 72 et 74 agencées au droit des longerons (non représentés) lorsque la poutre est montée sur le véhicule.

Les logements 68, 70 comportent chacun deux extrémités 69 et 71. L'extrémité 69, dite extrémité externe, est destinée à être en regard de la peau du pare-chocs lorsque la coque est montée sur le véhicule. L'extrémité 71 des logements 68 et 70, dite extrémité interne, est destinée à être en regard de chaque longeron.

Les prolonges 72 et 74 sont en forme de tube et comportent chacune une extrémité externe destinée à être en regard de la peau du pare-chocs, et une extrémité interne destinée à être en regard de chaque longeron. Ces prolonges 72 et 74 sont réalisées dans un matériau résistant, tel que l'acier, l'aluminium ou un matériau composite rigidifiant incorporent un métal. Les prolonges 72 et 74 traversent toute l'épaisseur de la coque 60, de façon qu'en cas de choc, ce soient elles qui subissent l'effort. Par conséquent, une poutre composée de la coque 60 avec les prolonges 72 et 74 procure une résistance aux chocs similaire à celle d'une poutre en métal, tout en comportant une coque en matière plastique, légère et facile à mouler.

Par ailleurs, la poutre possède une rigidité supplémentaire grâce aux corps creux 68 et 70 agencés dans la coque 60.

Les prolonges 72, 74 peuvent être rapportées par l'avant ou par l'arrière de la coque 60.

Sur la prolonge 72, on a fixé un support 78 d'un anneau 79 d'arrimage/remorquage. L'anneau 79 est fixé au support 78 de façon classique, par exemple par vissage.

La prolonge 72 est également munie d'une platine 76, destinée à être prise en sandwich entre la poutre et la platine du véhicule lors de la fixation de l'ensemble sur le véhicule. La platine 76 assure une fixation consolidée de la prolonge 72 sur la coque 60, en vue d'une sollicitation plus grande de cette prolonge par l'anneau 79 d'arrimage/remorquage.

Selon un mode de réalisation non représenté, les deux prolonges reçues dans la coque comportent une platine telle que la platine 76. Ou encore, aucune des deux prolonges ne comporte de platine.

Selon un autre mode de réalisation non représenté, les prolonges 72 et 74 ont une extrémité biseautée leur permettant de s'adapter au galbe du pare-chocs.

On peut voir sur la figure 2 que la coque 60 comporte, en plus du logement 68 destiné à recevoir la prolonge 72, un logement 82 destiné à recevoir le support 78 de l'anneau 79 d'arrimage/remorquage.

Selon un mode de réalisation non représenté, la coque 60 peut s'emboîter avec une doublure de coque, située entre la peau de pare-chocs et la coque 60. Cette doublure de coque offre l'avantage de délimiter les logements 68 et 70 enfermant les prolonges 72 et 74. Ainsi, les prolonges sont maintenues à l'intérieur de la coque 60 par le seul emboîtement de cette dernière dans la doublure de coque, les prolonges n'étant fixées en aucun point ni à la coque, ni à la doublure de coque. L'intégrité de la coque est ainsi respectée et aucune zone de fragilité de cette dernière n'est créée.

Selon un mode de réalisation non représenté, la coque 60 comporte, en plus des renforts 72 et 74, un autre renfort sous forme de traverse en forme de tube métallique à section rectangulaire, s'étendant du logement 68 au logement 70. Pour recevoir un tel renfort, la section de la coque est en U de façon à délimiter un logement allongé. Pour fixer un tel renfort dans la coque, une doublure de coque en matière plastique vient s'emboîter dans la coque, de façon à fermer la section ouverte du logement et former corps creux allongé délimitant un logement enfermant le renfort métallique.

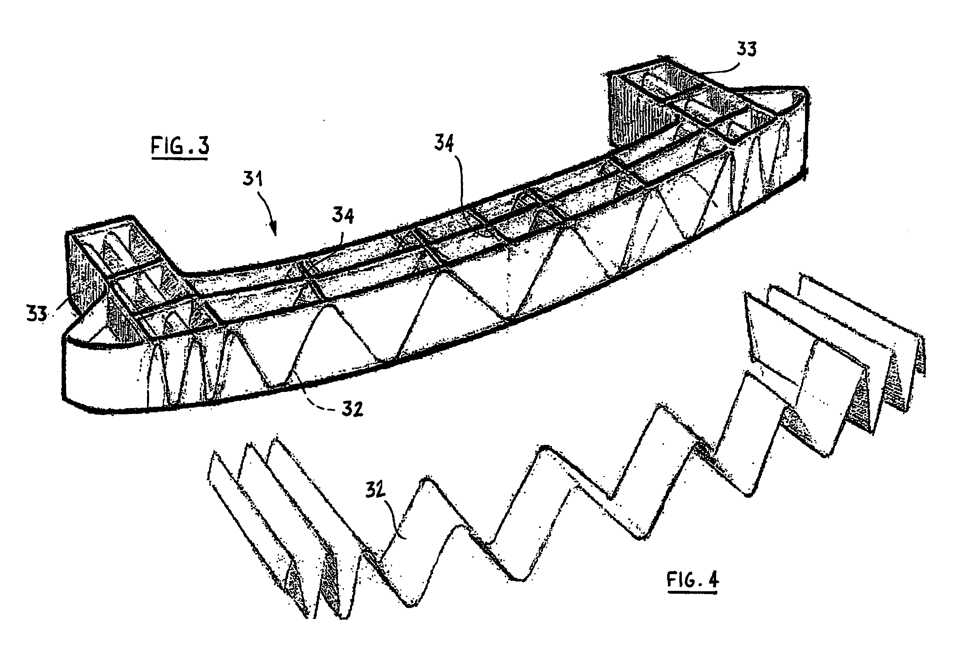

Dans le mode de réalisation de la figure 3, la coque 31 en polypropylène renforcé de fibres de verre présente une section ouverte vers le haut et vers le bas (lorsqu'elle est positionnée sur le véhicule), incorporant un renfort métallique surmoulé 32.

Ce renfort est ici constitué par une tôle ondulée dont la génératrice est horizontale et parallèle à la direction de roulement du véhicule.

Comme on le voit sur la figure 4, les ondulations de la tôle sont irrégulières. Elles sont telles que le renfort offre davantage de matière dans les parties 33 de la poutre situées dans le prolongement des longerons du véhicule, parties 33 qui, outre le fait de rigidifier, servent de moyens de fixation de la coque 31 à la structure du véhicule.

On peut noter que l'orientation de la tôle est propice à une absorption efficace d'énergie en cas de chocs frontaux, par flambage de sa paroi qui est perpendiculaire à la direction de tels chocs.

On remarque que la tôle ondulée occupe toute l'épaisseur de la poutre, y compris à ses extrémités qui sont plus larges pour s'étendre sur toute l'épaisseur des parties 33 de la coque prévues pour être assujetties aux longerons (non représentés).

Dans l'exemple décrit, le renfort est considéré comme reçu dans un logement qui épouse exactement sa forme extérieure du fait que la coque est surmoulée sur la tôle ondulée. Ce mode de fabrication est applicable à toutes formes de renfort.

Des nervures 34 ménagées dans la coque accroissent la rigidité de cette dernière et participent, en combinaison avec le renfort, à la tenue mécanique de l'ensemble.

En particulier, les nervures de la coque assurent le soutien vertical de la poutre.

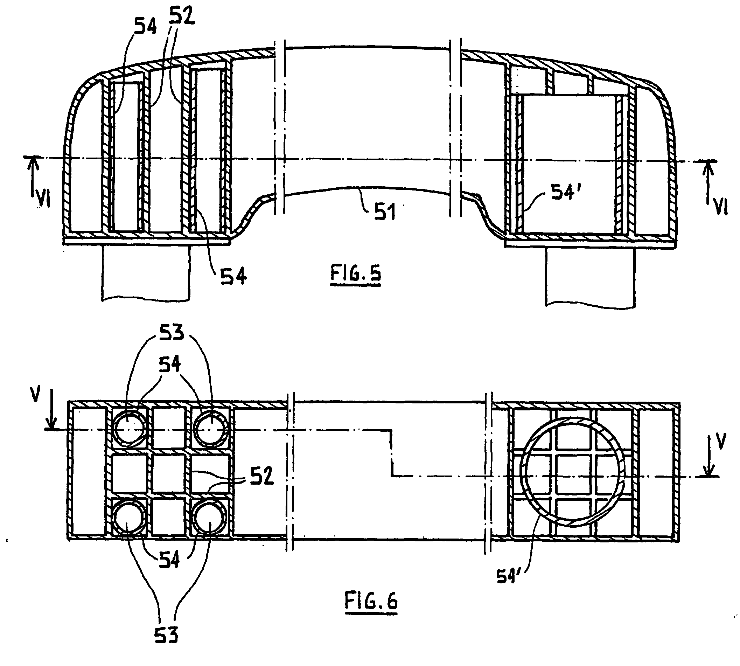

Dans le troisième mode de réalisation, non revendiqué, et ne faisant pas partie de l'invention, des figures 5 et 6, la coque 51 est munie de nervures croisées 52, notamment au droit des longerons (non représentés), pour former des nids d'abeilles constituant des absorbeurs locaux.

Les croisements de nervures délimitent des logements 53 aptes à recevoir des renforts sous forme de tubes 54 ou de profilés, de section quelconque et par exemple circulaire, disposés dans la direction de roulement du véhicule.

En fonction du besoin, qui est déterminé en particulier par le poids du véhicule, certains ou tous les logements définis par les nervures peuvent recevoir des renforts.

Dans une variante, illustrée par la partie droite de la poutre sur la figure 4, les nervures 52 intérieures ne s'étendent pas sur toute l'épaisseur de la coque (dans la direction de roulement du véhicule) mais libèrent un logement plus important entre les nervures périphériques pour un renfort 54' de gros diamètre. L'homme du métier saura choisir le renfort le plus approprié et la configuration à retenir pour les nervures.

Parmi les avantages de l'invention, on notera que le renfort apporté par les prolonges 72 et 74, éventuellement accompagné d'un renfort central, permet d'obtenir une poutre en matière plastique rigide dont la fixation des renforts à la coque 60, ne fragilise pas l'ensemble de la poutre.

Par ailleurs, grâce à la résistance du matériau de la prolonge 72, le support 78 de l'anneau d'arrimage/remorquage 79 bénéficie d'un bon ancrage pour être fixé à la poutre de façon suffisamment solide pour assurer sa fonction.

On notera également que les prolonges 72 et 74, une fois rapportées sur la coque 60 de la poutre, permettent de renforcer, grâce à leur matériau rigide, la poutre afin de satisfaire aux exigences des cahiers des charges de cette poutre.

Un autre avantage consiste en ce que les renforts agencés dans la coque de poutre assurent, en plus de leur fonction de rigidification pour les chocs, une fonction de soutien vertical (en Z) de la poutre, et donc du pare-chocs.

Cette fonction est particulièrement utile pour les pare-chocs arrière qui servent de seuil de chargement, mais aussi pour des pare-chocs avant susceptibles d'être sollicités verticalement par des utilisateurs.

Enfin, on comprend que les renforts métalliques décrits peuvent très facilement être séparés de la coque lorsque, en fin de vie de la poutre, les matériaux qui la constituent doivent être recyclés.

D'autres variantes pourraient être déduites des exemples décrits ci-dessus, par des modifications de structures ou de fonctions ne sortant pas du cadre de l'invention.

## Revendications

1. Ensemble d'un renfort et d'une coque de poutre de véhicule automobile destinée à prendre place derrière une peau de pare-chocs, comportant un logement (68, 70) pour recevoir le renfort (32, 54, 54', 72, 74) en son intérieur, le logement comportant une extrémité, dite extrémité externe, agencée au voisinage immédiat de la peau de pare-chocs et une extrémité, dite extrémité interne, agencée au voisinage immédiat d'un longeron du véhicule, lorsque la coque de poutre est montée sur le véhicule **caractérisé en ce que** la coque est obtenue par moulage par injection, compression ou extrusion-pressage, **en ce que** le logement est dimensionné pour épouser la forme extérieure du renfort dans la partie de la coque disposée au droit du longeron et **en ce que** le renfort est un renfort métallique notamment en aluminium ou un renfort en matériau composite incorporant un métal.

2. Ensemble selon la revendication 1, dans laquelle 1 renfort est une prolonge (72, 74) de longeron traversant toute l'épaisseur de la coque, de façon qu'en cas de choc, ce soit la prolonge qui subisse l'effort.

3. Ensemble selon la revendication 1 ou 2, dans laquelle le logement est délimité par une partie de la coque (17) présentant une section ouverte.

4. Ensemble selon l'une quelconque des revendications 1 à 3, dont la coque est dimensionnée pour épouser la forme intérieure de la peau de pare-chocs derrière laquelle la poutre doit prendre place.

5. Ensemble selon l'une quelconque des revendications 1 à 4, comportant plusieurs logements pour recevoir plusieurs renforts.

6. Ensemble selon l'une quelconque des revendications 1 à 5, dans lequel le logement comporte des moyens d'absorption de chocs, par exemple des nids d'abeilles locaux (52).

7. Ensemble selon l'une quelconque des revendications 1 à 6, dont la coque est réalisée en matière thermoplastique, notamment en polypropylène.

8. Ensemble de poutre selon l'une quelconque des revendications 1 à 7, dans lequel le logement consiste en un canal (68, 70).

9. Ensemble selon l'une quelconque des revendications 1 à 8, comportant au moins deux moyens de fixation à la structure du véhicule et comportant un logement s'étendant longitudinalement d'un moyen de fixation à l'autre.

10. Ensemble selon l'une quelconque des revendications 1 à 9, dans lequel la coque comporte une doublure de coque qui vient s'emboîter avec la coque en formant un corps creux délimitant le logement recevant le renfort.

11. Ensemble selon l'une quelconque des revendications 1 à 10, et d'un renfort dans lequel le renfort assure une fonction de soutien vertical de la poutre.

12. Ensemble selon la revendication 11, dans lequel le renfort est une prolonge (72, 74) de longeron tubulaire ayant une génératrice sensiblement parallèle à la direction longitudinale du véhicule,

13. Ensemble selon la revendication 12, dans lequel la prolonge est en forme de tube biseauté.

14. Ensemble selon l'une quelconque des revendications 11 à 13 , dans lequel le renfort (72) comporte une pièce support (78), notamment un support d'un anneau (79) d'arrimage/remorquage.

15. Ensemble selon l'une quelconque des revendications 11 à 14, dans lequel le renfort est muni d'une platine à son extrémité située au droit du longeron.

16. Poutre de véhicule automobile destinée à prendre place derrière une peau de pare-chocs, **caractérisée en ce qu'**elle comprend un ensemble d'un renfort et d'une coque selon l'une des revendications précédentes.

## Claims

1. A motor vehicle assembly comprising a strength member and a beam shell, the shell intended to place behind a bumper skin, the assembly including a housing (68, 70) for receiving the strength member (32, 54, 54', 72, 74) therein, the housing having an end referred to as an "outside end" arranged in the immediate vicinity of the bumper skin, and an end referred to as an "inside end" arranged in the immediate vicinity of a side rail of the vehicle when the beam shell is mounted on the vehicle, the assembly being **characterized in that** the shell is obtained by injection molding, compression, or extrusion-pressing, **in that** the housing is dimensioned to fit closely to the outside shape of the strength member in the portion of the shell that is disposed in register with the side rail, and **in that** the strength member is a strength member made of metal, in particular of aluminum, or a strength member made of a composite material incorporating a metal.

2. An assembly according to claim 1, in which the strength member is an extension (72, 74) of the side rail passing through the entire thickness of the shell, so that in the event of an impact, it is the extension that is subjected to the force.

3. An assembly according to claim 1 or claim 2, in which the housing is delimited by a portion of the shell (17) that presents a section that is open.

4. An assembly according to any one of claims 1 to 3, in which the shell is dimensioned to fit closely to the inside shape of the bumper skin behind which the beam is to be placed.

5. An assembly according to any one of claims 1 to 4, having a plurality of housings for receiving a plurality of strength members.

6. An assembly according to any one of claims 1 to 5, in which the housing includes impact-absorber means, e.g. local honeycombs (52).

7. An assembly according to any one of claims 1 to 6, in which the shell is made of thermoplastic material, in particular of polypropylene.

8. A beam assembly according to any one of claims 1 to 7, in which the housing consists of a channel (68, 70).

9. An assembly according to any one of claims 1 to 8, including at least two fastener means for fastening to the structure of the vehicle, and having a housing extending longitudinally from one fastener means to the other.

10. An assembly according to any one of claims 1 to 9, in which the shell includes a shell cladding that is engaged with the shell to form a hollow body defining the housing that receives the strength member.

11. An assembly according to any one of claims 1 to 10, in which the strength member performs a function of supporting the beam vertically.

12. An assembly according to claim 11, in which the strength member is an extension (72, 74) of a tubular side rail having a generator line that is substantially parallel to the longitudinal direction of the vehicle.

13. An assembly according to claim 12, in which the extension is in the form of a chamfered tube.

14. An assembly according to any one of claims 11 to 13, in which the strength member (72) includes a support part (78), in particular a support for a stow/tow ring (79).

15. An assembly according to any one of claims 11 to 14, in which the strength member is provided with a plate at its end situated in register with the side rail.

16. A motor vehicle beam for placing behind a bumper skin, the beam being **characterized in that** it comprises an assembly of a strength member and a shell according to any preceding claim.

## Patentansprüche

1. Anordnung einer Verstärkung und eines schalenförmigen Trägers für ein Kraftfahrzeug, der hinter der Verkleidung von Stoßfängern angeordnet werden soll und eine Aufnahme (68, 70) zum Anbringen der Verstärkung (32, 54, 54', 72 74) in seinem Inneren aufweist, wobei die Aufnahme ein als äußeres Ende bezeichnetes Ende aufweist, das in direkter Nachbarschaft zur Stoßfängerverkleidung angeordnet ist, sowie ein als inneres Ende bezeichnetes Ende aufweist, das in direkter Nachbarschaft eines Längsträgers des Fahrzeugs angeordnet ist, wenn der schalenförmige Träger am Fahrzeug montiert wird, **dadurch gekennzeichnet, dass** die Schale durch Spritzguss, durch Druckformgebung oder durch Extrusionspressen hergestellt ist, dass die Aufnahme so dimensioniert ist, dass die äußere Form der Verstärkung in den an dem Längsträger angeordneten Teil der Schale hineinpasst und dass es sich bei der Verstärkung um eine Verstärkung aus Metall - insbesondere aus Aluminium - oder einer Verstärkung aus einem Verbundstoff handelt, der Metall enthält.

2. Anordnung nach Anspruch 1, bei der die Verstärkung eine Verlängerung (72, 74) des Längsträgers ist, der die Schale in ihrer gesamten Dicke durchquert, so dass im Falle eines Aufpralls die Verlängerung die Kraft aufnimmt.

3. Anordnung nach Anspruch 1 oder 2, bei der die Aufnahme durch einen Teil der Schale (71) begrenzt ist, der einen offenen Abschnitt darstellt.

4. Anordnung nach einem der Ansprüche 1 bis 3, deren Schale so dimensioniert ist, dass sie in die innere Form der Stoßfängerverkleidung hineinpasst, hinter der der Träger eingesetzt werden soll.

5. Anordnung nach einem der Ansprüche 1 bis 4, die mehrere Aufnahmen zum Anbringen mehrerer Verstärkungen aufweist.

6. Anordnung nach einem der Ansprüche 1 bis 5, in der die Aufnahme Mittel zum Absorbieren von Stößen, z.B. lokal vorgesehene Wabenstrukturen, aufweist.

7. Anordnung nach einem der Ansprüche 1 bis 6, wobei die Schale aus einem thermoplastischen Werkstoff, insbesondere aus Polypropylen, hergestellt ist.

8. Anordnung aus Trägern nach einem der Ansprüche 1 bis 7, bei der die Aufnahme aus einem Kanal (68, 70) besteht.

9. Anordnung nach einem der Ansprüche 1 bis 8, die mindestens zwei Befestigungsmittel mit der Fahrzeugstruktur aufweist und die eine Aufnahme aufweist, die sich longitudinal von einem Befestigungsmittel zum anderen erstreckt.

10. Anordnung nach einem der Ansprüche 1 bis 9, bei der die Schale eine innere Auskleidung aufweist, die in die Schale einsetzbar ist und einen Hohlkörper bildet, der die Aufnahme zum Anbringen der Verstärkung abgrenzt.

11. Anordnung nach einem der Ansprüche 1 bis 10, bei der die Verstärkung die Funktion der vertikalen Halterung des Trägers ausübt.

12. Anordnung nach Anspruch 11, bei der die Verstärkung eine Verlängerung (72, 74) des rohrförmigen Längsträgers ist, dessen Mantellinie im Wesentlichen parallel zur Längsrichtung des Fahrzeugs verläuft.

13. Anordnung nach Anspruch 12, bei der die Verlängerung die Form eines abgeschrägten Rohrs hat.

14. Anordnung nach einem der Ansprüche 11 bis 13, bei der die Verstärkung (72) ein Halteteil (78), insbesondere eine Halterung für einen Ring zum Ankoppeln/Abschleppen, aufweist.

15. Anordnung nach einem der Ansprüche 11 bis 14, bei der die Verstärkung an ihrem äußeren Ende mit einer Platte ausgerüstet ist, die sich senkrecht zum Längsträger befindet.

16. Träger eines Kraftfahrzeugs, der hinter einer Stoßfängerverkleidung angeordnet werden soll, **dadurch gekennzeichnet, dass** er eine Verstärkungsanordnung und eine Schale nach den vorangehenden Ansprüchen umfasst.
